# EUROPEAN PATENT SPECIFICATION

(11) **EP 0 542 541 B1**
(45) Date of publication and mention of the grant of the patent: **29.05.1996**
(21) Application number: 92310332.9
(22) Date of filing: 12.11.1992
(51) Int. Cl.: B29D 30/24

(54) **Method and apparatus for manufacturing a tyre belt**
Verfahren und Vorrichtung zur Herstellung eines Gürtels für Reifen
Procédé et dispositif pour la fabrication d'une ceinture pour pneumatiques

(30) Priority: 13.11.1991 JP 326470/91; 12.10.1992 JP 300348/92
(43) Date of publication of application: 19.05.1993
(73) Proprietor: SUMITOMO RUBBER INDUSTRIES LIMITED, Kobe-shi Hyogo-ken (JP)
(72) Inventor: Suzuki, Shigehiko, Amagasaki-shi, Hyogo-ken (JP); Yasui, Itsuo, Nishinomiya-shi, Hyogo-ken (JP)
(74) Representative: Stewart, Charles Geoffrey

(56) References cited:
- EP-A- 0 319 588
- EP-A- 0 453 294
- FR-A- 2 285 255
- FR-A- 2 354 874
- GB-A- 2 085 376
- GB-A- 2 118 111
- US-A- 3 790 425

## Description

The present invention relates to an apparatus for manufacturing a tyre tread reinforcing belt by using a contractible drum.

In order to increase the rigidity of a tyre tread a breaker or belt is provided radially outside of the carcass in the tread portion, and further a band belt or bandage may be provided on the radially outer surface of the breaker.

A contractible drum for forming a tread reinforcing belt independently of the tyre carcass, is known, for example from FR-A-2354874. The contractible drum comprises circumferentially arranged segments providing an outer surface, the segments being movable in the radial direction from a radially outer normal position to a radially inner position, and wherein in the normal state the segments provide a circumferentially extending shaping surface having a convex profile substantially corresponding to the required radially inner face of the belt to be made, the segments being mounted such that in the contracted state the maximum diameter of the outer surface thereof is smaller than said minimum diameter of the radially inner face of the belt to be manufactured, and contracting means to move the segments from the radially outer position to the radially inner position.

Such belts and bandages have also been formed by winding a strip of tyre fabric around the carcass.

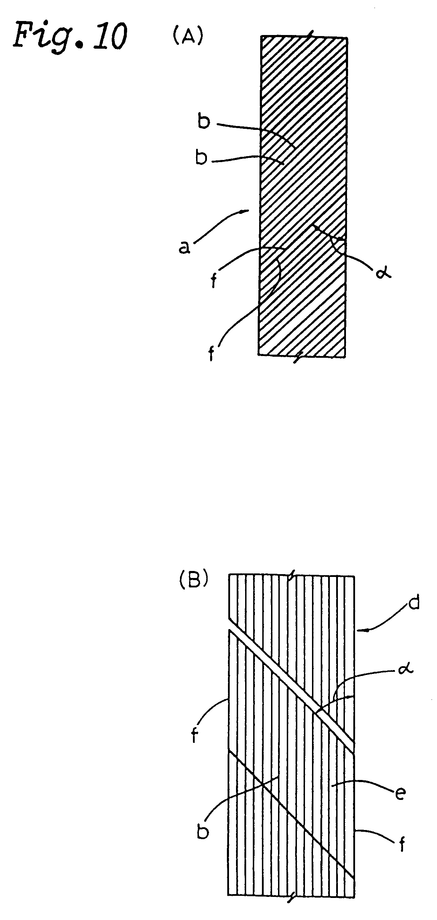

Referring to a specific breaker belt as an example, a breaker belt (a) is, as shown in Fig.10(A), arranged such that the cords (b) thereof are inclined at 15 to 30 degrees with respect to the tyre equator.

The breaker belt (a) with the inclined cords (b) is usually formed, for example as shown in Fig.10(B), by cutting a sheet of tyre fabric (d), the cords of which extend in the longitudinal direction thereof, at a bias angle corresponding to the inclination angle of the cords (b) in the breaker belt (a), so as to form parallelogrammatic pieces (e), turning and arranging the pieces (e) side by side and butt joining the ends f thereof.

The breaker belt (a) formed in such a manner causes unstable operation during running of the tyre due to the butt jointed sections (f) which extend diagonally with respect to the rotating direction of the tyre and thus the joined (f) does not simultaneously contact the ground.

Such effects disturb the straight running performance, deteriorate steering performance during cornering, and considerably affect high speed running. In the case of a motorcycle in particular, such effects are remarkable.

In order to solve part of the problems, in Japanese patent application No. 2-103305, the applicant of the present invention has proposed a method of forming a band belt by spirally winding a long narrow reinforcing strip.

In a conventional method, a carcass is first formed on a tyre building drum, and then the band belt is formed by spirally winding a strip around and onto the outer circumferential surface of the carcass. However, spirally wound pitches tended to be irregular due to reasons such as deformation of the carcass, and there is thus a problem of quality in reinforcing the tread portion by this method.

At the start end point where the strip winding is started and at the end point where the strip winding is terminated in particular, dislocation and looseness are liable to occur, and much time is required for strip winding work, therefore tyre building efficiency is poor.

Especially, in a tyre whose cross section has a substantial bow shape such as a motorcycle tyre, difficulties occur in stabilisation of accuracy and the resultant quality of the band belt.

It is therefore, an object of the present invention to provide an apparatus for manufacturing a tyre belt, in which the tyre belt can be formed accurately and efficiently.

Accordingly the invention provides an apparatus for a apparatus for making a radial tyre belt from a spirally wound ribbon of rubber compound having one or a plurality of parallel reinforcing belt cords embedded along the length thereof, comprising a main frame having a supporting shaft, a contractible drum with a shaping face for receiving the spirally wound ribbon, rotating means for rotating said contractible drum when receiving the spirally wound ribbon, said contractible drum having a plurality of circumferentially arranged segments for inward and outward radial movement, each of said segments having a convex shaped surface for collectively forming the shaping face of the contractible drum in an outermost position, said contractible drum having means for holding the spirally wound member in place with respect to the shaping face as the ribbon is wound onto the drum, said rotating means including a tubular rotating shaft rotatably mounted on said supporting shaft for supporting said contractible drum, said plurality of segments divided into alternately arranged first segments and second segments, each of said first segments having opposite sides radially inclined toward the centre of the contractible drum for abutting said second segments, each of said second segments having opposite sides radially inclined outward from the centre of the contractible drum for abutting said first segments, such that the plurality of segments in the outermost position fit together to form a substantially continuous shaping face, a plurality of guide shafts, corresponding one to each of said segments and extending radially outwardly from said rotating shaft, for guiding the radial movement and preventing axial movement of each of the plurality of segments, contracting means for moving the plurality of segments radially inwardly to reduce and outwardly to enlarge the diameter of the contractible drum, said contracting means including a cylinder actuator slidably mounted on said tubular rotating shaft, said cylinder actuator and rotating shaft collectively forming an air chamber therebetween, a piston disposed on said rotating shaft for dividing the air chamber into a first chamber and a second chamber, a plurality of linking pieces, each linking pieces being connected to said cylinder actuator and corresponding one of said segments, and means for pressurising said first chamber for causing said plurality of segments to move radially outward to the outermost position in preparation for receiving the spirally wound reinforcing member and pressurising said second chamber for causing said plurality segments to move radially inwardly thereby decreasing the diameter of the contractible drum.

As the tyre belt is formed by spirally winding a ribbon on the shaping face of the drum, the winding is stable compared to the conventional method in which the strip is wound on the outside of a carcass. Therefore, it becomes possible to form the belt more accurately.

Further, as the drum can reduce in diameter of the shaping face, it is easy to remove the wound ribbon from the drum without deforming the shape thereof, whereby the accuracy of the formed belt is maintained, and the work efficiency thereof can be improved.

Furthermore, because of the existence of the protrusions, movement and resultant looseness of the windings of the ribbon is prevented, and the positioning of the start end and the finish end of the ribbon winding is facilitated. Therefore, winding accuracy is improved. As a result, belt edge separation caused during running by an irregular arrangement of the cords can be prevented. Tyre uniformity and belt strength and durability are also improved.

An embodiment of the present invention will now be described in conjunction with the accompanying drawings, in which:-
Fig.1 is a cross sectional view of a tyre provided with a belt;
Fig.2 is a perspective view showing an example of a ribbon used to form the belt;
Fig.3 is a partial sectional view showing an example of the spiral winding of the ribbon;
Fig.4 is a sectional view of an example of a contractible drum used to form the belt;
Fig.5 is an enlarged perspective view of one of the segments of the drum of Figure 4;
Figs.6(A) and (B) are diagrams showing operations of the segments, Fig.6(A) showing the normal state (expanded state) and Fig.6(B) showing the contracted state of the drum;
Fig.7 is a cross sectional view of a segment showing the profile of the shaping face of the drum;
Fig.8 is a side view showing the operation of the segments, the left half showing the normal state (expanded state) and the right half showing the contracted state;
Fig.9 is a cross sectional view showing another tyre provided with a belt; and
Figs.10(A) and 10(B) are plan views explaining the conventional method of manufacturing a tyre belt.

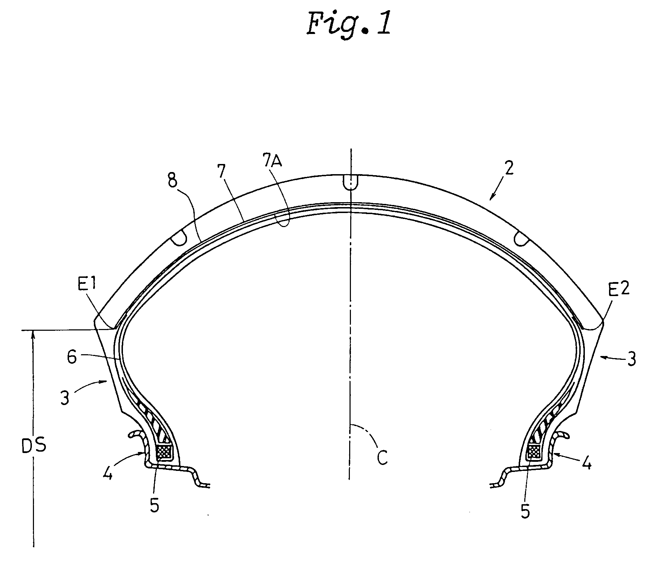

In Figs.1 to 3, a pneumatic tyre 1 is for motorcycle. The tyre 1 comprises a tread portion 2, a pair of axially spaced bead portions, a pair of sidewalls 3 extending between the tread edges and the bead portions, a bead core 5 disposed in each bead portion, a carcass 6 extending between the bead portions and turned up around the bead cores 5 from the inside to the outside of the tyre, a bead apex disposed radially outside each bead core 5, and a belt 8 disposed radially outside the carcass in the tread portion 2.

The carcass 6 comprises at least one ply of cords arranged radially at an angle of 60 to 90 degrees to the tyre equator. For the carcass cords, organic fibre cords, e.g. nylon, rayon, polyester, aromatic polyamide or the like can be used.

The belt 8 has a radially inner surface having a profile concavely curved with a maximum diameter at the centre and a minimum diameter DS lies at both edges E1 and E2. This belt profile is substantially the same as the radially outer surface of the carcass 6. The radius of curvature of the belt profile transversely of the tyre is very small in comparison with passenger car tyres and truck/bus tyres.

The belt 8 is composed of at least one ribbon 10 spirally wound continuously or discontinuously from edge E1 to edge E2.

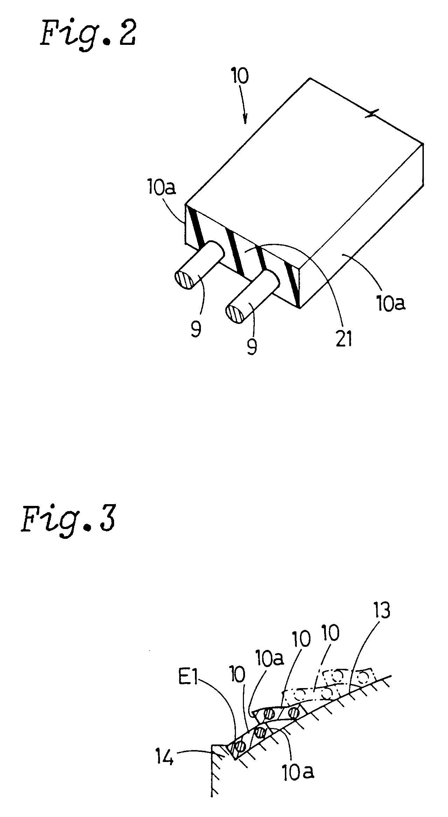

The ribbon 10 is a long strip of a rubber compound 21 in which one or a plurality of parallel belt reinforcement cords 9 are embedded along the length thereof. In this example, as shown in Fig.2, two belt cords 9 are embedded, and the ribbon 10 has a generally rectangular cross sectional shape.

For the belt cords 9, organic fibre cords, e.g. nylon, aromatic polyamide or the like are used. Steel cords may be used.

Therefore, the belt 8 is composed of at least one spirally wound belt cord 9.

In the present invention, in order to form the belt 8, a contractible drum 25 is used.

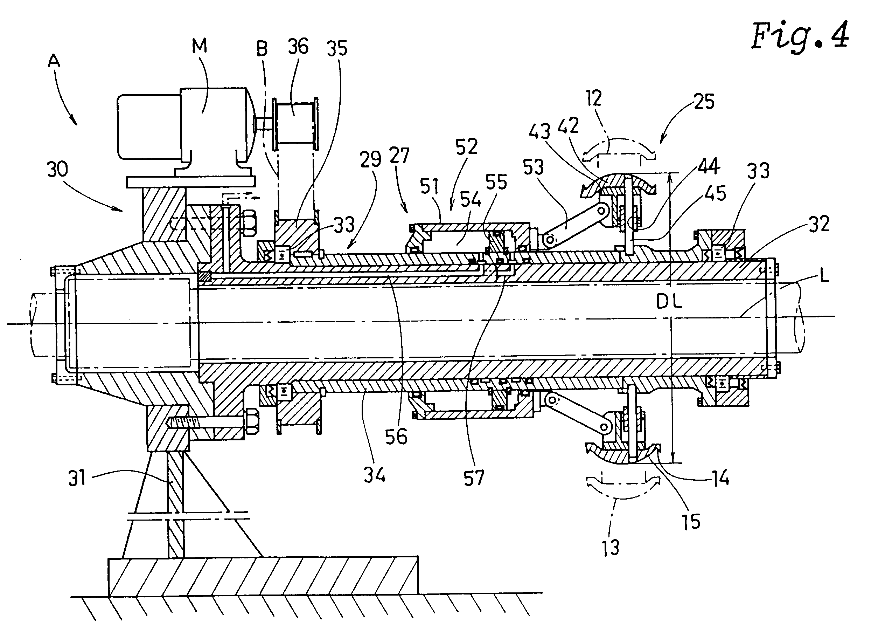

Fig.4 shows an apparatus (A) to form the tyre belt. In this embodiment, a contractible drum 25 is provided.

The apparatus (A) comprises a main frame 30 with a supporting shaft 32, a contractible drum 25 supported rotatably around the supporting shaft 32, contracting means 27 to reduce the diameter of the drum 25, and rotating means 29 to rotate the drum 25.

The main frame 30 has an uprightly extending wall 31, from which the supporting shaft 32 extends horizontally.

The rotating means 29 comprises a tubular rotating shaft 34, and a geared motor M installed on the main frame 30. The tubular rotating shaft 34 is mounted externally on the supporting shaft 32 and is freely rotatable in a pair of bearings 33 disposed at both the front and rear ends of the rotating shaft 34.

At the rear end of the rotating shaft 34 on the main frame side, a pulley 35 is fixedly provided. A drive pulley 36 is fixed to the output end of the geared motor M. A toothed belt B is wound around the pulley 35 and the drive pulley 36. Therefore, the rotating shaft 34 is rotatable by the motor M.

The contractible drum 25 provides an external circumferential surface 13 around which the foregoing ribbon 10 may be wound.

The contractible drum 25 is disposed on the rotating shaft 34 on the other side of the pulley 35 concentrically with the rotating shaft 34.

The contractible drum 25 comprises a circular body formed by a plurality of segments 12, in this example twelve segments, continuously arranged in the circumferential direction around the rotating shaft 34.

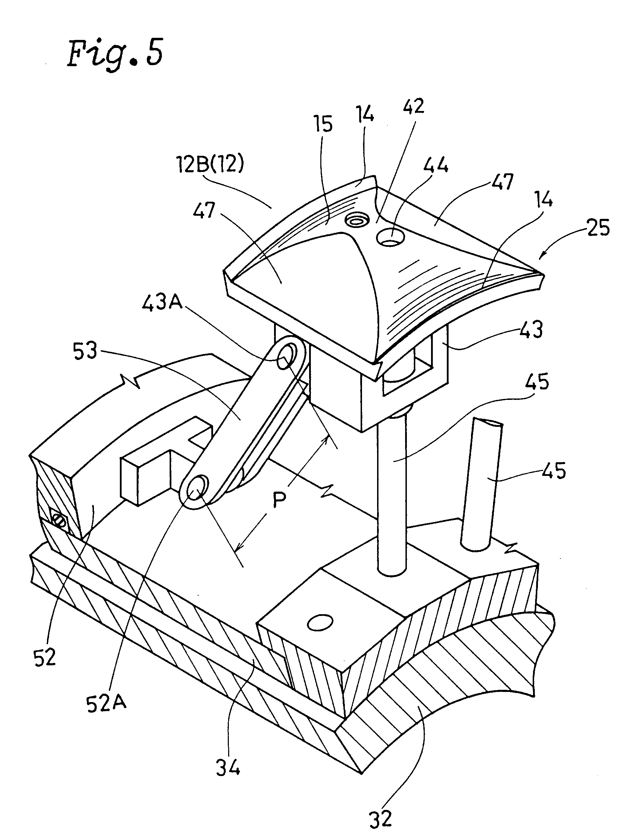

As shown in Fig.5, each segment 12 comprises a guide shaft 45 extending radially outwardly from the circumferential surface of the rotating shaft 34, an operating piece 43 provided with a radially extending guide hole 44 into which the guide shaft 45 is inserted so as to be supported by the guide shaft 45 freely movable therealong, and a winding piece 42 detachably fixed to the radially outer end of the operating piece 43 and having an external surface 15 which forms part of the above-mentioned external circumferential surface 13 around which the ribbon 10 is wound. The guide hole 44 is provided with a bush. Thus, each of the winding pieces 42 is supported movably in the radial direction by the guide shaft 45.

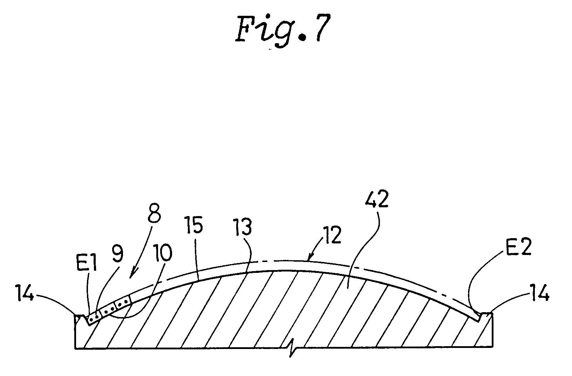

The external surface 15 of each of the winding pieces 42 has a convex profile as shown in Fig.7, which is highest at the centre thereof and decreases in height towards both sides.

In general, this profile is the same as the required belt profile in the finished tyre, but it can be slightly changed therefrom to adjust the final belt cord tension in the service condition of the tyre. For example, if the diameter is decreased in both edges, the belt cord tension will be increased in the belt edge portions in service.

On the external surface 15, a protrusion is provided in each edge thereof to form an upward step or stopper 14 for the ribbon.

The winding piece 42 is detachably fixed to the operating piece 43 by means of a bolt, so that it can be changed with another winding piece having a different profile and size to form a different belt.

In this example, two types of segments 12A and 12B which are alternately arranged in the circumferential direction, are used as the above-mentioned segments 12.

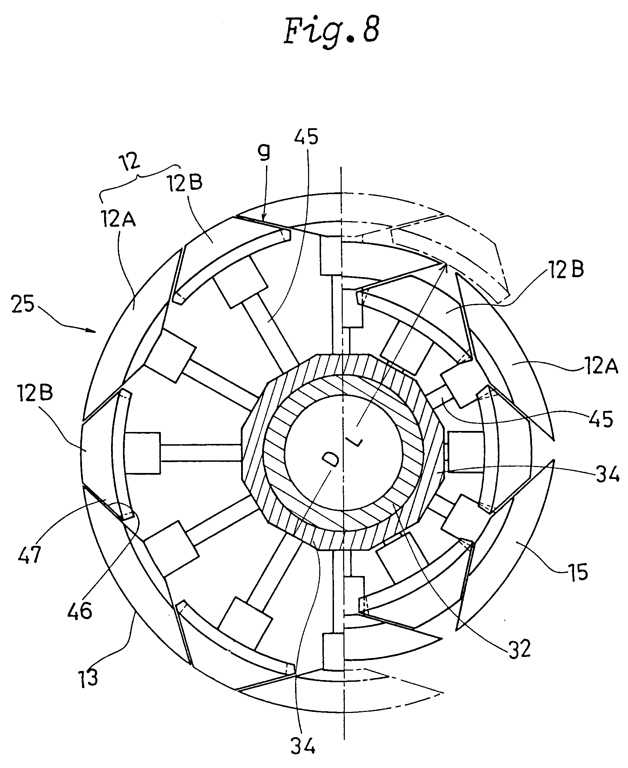

As shown in Fig.8, a major difference between the two types resides in the shape of the winding piece 42. The winding pieces of segments 12A have an inverted generally trapezoidal shape, and the winding pieces of segments 12B have a generally trapezoidal shape.

The winding pieces of the segments 12A are provided on both sides facing the adjacent segments 12B with slopes 46 so that the radially inner edges are inclined towards the centre of the winding piece. The winding pieces of the segments 12B are provided on both sides facing the adjacent segments 12A with slopes 47 so the radially outer edges are inclined towards the centre of the winding piece. By forming the opposite surfaces with slopes 46 and 47 in this manner, the clearance (g) between the circumferentially adjacent segments in the normal expanded state is made substantially zero.

The above-mentioned contracting means 27 comprises a cylinder 52, and a plurality of linking pieces 53 connecting the cylinder 52 to the respective segments 12.

The cylinder 52 comprises an external cylindrical body 51 mounted on the rotating shaft 34 movable in the axial direction of the rotating shaft 34, and a piston 55.

The external cylindrical body 51 surrounds the external surface of the rotating shaft 34, thereby forming a closed air chamber 54 between the inner surface of the external cylindrical body 51 and the outer surface of the rotating shaft 34. The piston 55 is a ring shaped body disposed in the air chamber 54. The piston 55 extends from the outer surface of the rotating shaft 34 to the inner surface of the cylindrical body 51 so as to divide the air chamber 54 into two parts: a front part 54B on the contractible drum side and a rear part 54A on the reverse side. The radially inner edge of the piston 55 is air-tightly fixed to the rotating shaft 34. The radially outer edge or surface of the piston 55 is in slidable contact with an air-tightly seal with the inner surface of the external cylindrical body 51.

In order to pressurise and depressurise the front part 54B and the rear part 54A separately, a front pilot hole 57 and a rear pilot hole 56 are provided. The ends of the front and rear pilot holes 57 and 56 open at the front and rear parts 54B and 54A respectively.

The other ends of the front and rear pilot holes 57 and 56 are connected to an external air source (not shown) through the inside of the supporting shaft 32 and the rotating shaft 34.

Each of the linking pieces 53 is disposed between the front of the cylindrical body 51 and the operating piece 43 of each segment 12, and both ends are connected rotatably by two pins 43A and 52A to the cylindrical body 51 and the operating piece 43.

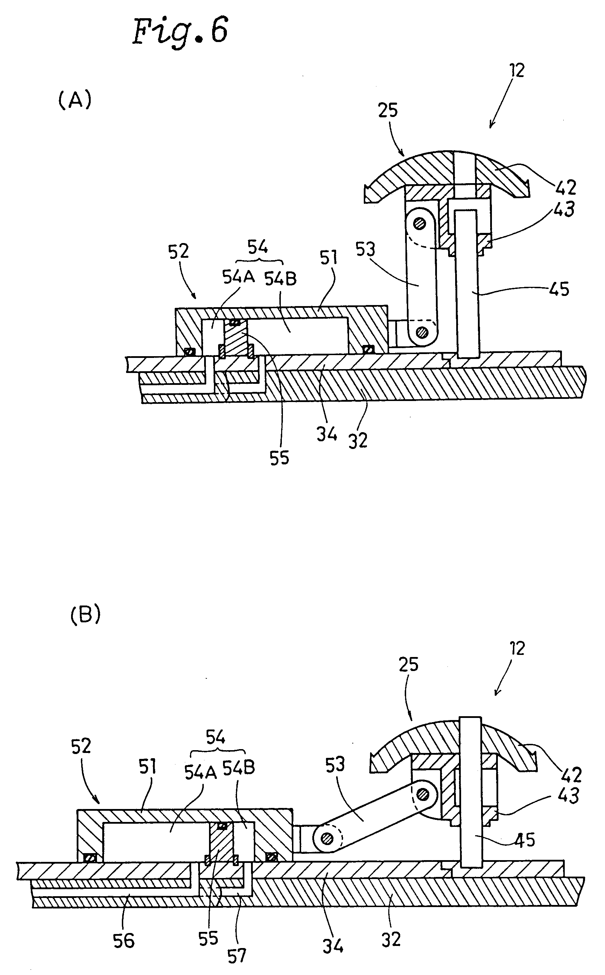

Therefore, as shown in Fig.6A, when the front part 54B of the air chamber 54 is pressurised by high pressure air sent from an air compressor through the front pilot hole 57, the cylindrical body 51 moves forward, that is, towards the drum 25, and all the linking pieces 53 rise, and the connected winding pieces 42 moves radially outward. This is the normal state (expanded state) of the contractible drum 25, which is shown in the left half of Fig.8.

On the other hand, as shown in Fig.6B, when the front part 54B is depressurised and the rear part 54A of the air chamber 54 is pressurised by high pressure air sent from the air compressor through the rear pilot hole 56, the cylindrical body 51 moves backwards, and all the linking pieces 53 come down, and the connected winding pieces 42 moves radially inward. This is the contracted state of the contractible drum 25, which is shown in the right half of Fig.8.

In this example, as shown in Fig.8, in order to make the radial inward movement of the segments 12B caused by the backward movement of the cylindrical body 51 greater than that of the segments 12A, the linking pieces 53 have two different lengths P between the centres of the holes for the pins 43A and 52A. That is, the linking pieces for the segments 12B are shorter than those for the segments 12A.

In the above-mentioned contracted state of the drum 25, the maximum diameter DL of the external circumferential surface 13 becomes smaller than the minimum diameter DS of the belt 8.

Incidentally, the maximum diameter DL in this example is the diameter of the winding pieces 42 of the segments 12A measured at the centre thereof.

Therefore, in the apparatus (A) in this example, by energising the motor M, the drum 25 is rotated around its axis L. At the same time, the contracting means 27 is rotated. Even when rotated, the contracting means 27 is operatable and accordingly the diameter of the drum 25 is changeable.

Using the apparatus (A), a tyre belt 8 is manufactured as follows:
The ribbon 10 is made by embedding the belt cords 9 in a strip of extruded rubber compound 21. The ribbon 10 is reeled. A reel of the ribbon 10 is set in a ribbon supplying apparatus.

A mould release agent is applied to the external circumferential surface 13 of the building apparatus.

The winding starting end of the ribbon 10 from the reel is fixed onto the external circumferential surface 13 of the drum 25 which is in its normal or expanded state (in the example shown in Fig.7, fixed at a point immediately axially inside of one of the protrusions 14).

The drum 25 is then rotated by driving the motor M to spirally wind the ribbon 10, which is traversed from the winding start point to the end point by traversing means.

The winding of the ribbon 10 is pressed onto the external circumferential surface 13 by a pressure roller.

After the ribbon 10 has been wound and the windings thereof have been pressed completely from the starting edge E1 to the terminal edge E2, the rotation of the drum 25, and the traversing movement and supply of the ribbon are stopped. The ribbon 10 is cut off at the winding end point (in Fig.7, the end point is the other protrusion) and the diameter of the external circumferential surface 13 of the drum 25 is decreased and the wound ribbon which is now a formed belt 8 is removed from the drum 25.

During winding the ribbon 10, the adjacent edges 10a may be overlapped as shown in Fig.3. Alternatively, they can be butted as shown in Fig.7. It is preferable that no space is provided between the adjacent edges 10a at least in the belt edge portion because the inclination of the surface 13 is large and the wound ribbon is then liable to slip disturbing its winding pitch.

Using the formed belt, a pneumatic tyre is manufactured by the steps of:
Applying a carcass ply around an external cylindrical circumferential surface of a tyre building drum; winding a pair of bead cores around the cylindrical carcass ply; placing the belt around the carcass ply; changing the profile of the external circumferential surface of the tyre building drum to a toroidal shape, thereby changing the profile of the carcass ply from the cylindrical shape to a similar toroidal shape so as to fit the carcass crown portion to the inner surface of the belt; turning up both the edges of the carcass ply around the bead cores; applying tread rubber, sidewall rubber, a reinforcing layer, etc on the assembly to form a raw tyre; putting the raw tyre into a vulcanising mould; vulcanising the raw tyre; and demoulding the tyre.

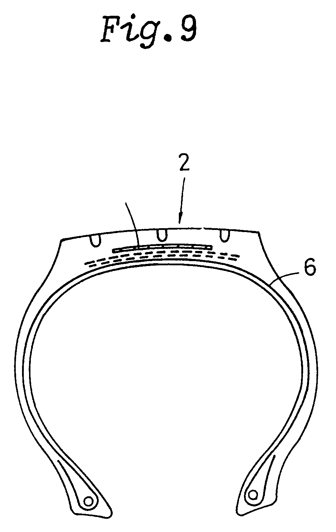

The present invention can be applied to various tyres, for example a passenger car tyre, a heavy duty tyre such as truck/bus tyre as shown in Fig.9 and the like, in addition to the above-described motorcycle tyre.

## Claims

1. An apparatus (A) for making a radial tyre belt from a spirally wound ribbon (10) of rubber compound (21) having one or a plurality of parallel reinforcing belt cords (9) embedded along the length thereof, comprising a main frame (30) having a supporting shaft (32), a contractible drum (25) with a shaping face for receiving the spirally wound ribbon (10), rotating means (29) for rotating said contractible drum (25) when receiving the spirally wound ribbon (10), said contractible drum (25) having a plurality of circumferentially arranged segments (12) for inward and outward radial movement, each of said segments (12) having a convex shaped surface (15) for collectively forming the shaping face (13) of the contractible drum (25) in an outermost position, said contractible drum (25) having means for holding the spirally wound member in place with respect to the shaping face as the ribbon (10) is wound onto the drum, said rotating means (29) including a tubular rotating shaft (34) rotatably mounted on said supporting shaft (32) for supporting said contractible drum (25), said plurality of segments (12) divided into alternately arranged first segments (12A) and second segments (12B), each of said first segments (12A) having opposite sides (46) radially inclined toward the centre of the contractible drum (25) for abutting said second segments (12B), each of said second segments (12B) having opposite sides (47) radially inclined outward from the centre of the contractible drum (25) for abutting said first segments (12A), such that the plurality of segments (12) in the outermost position fit together to form a substantially continuous shaping face (13), a plurality of guide shafts (45), corresponding one to each of said segments (12) and extending radially outwardly from said rotating shaft (34), for guiding the radial movement and preventing axial movement of each of the plurality of segments (12), contracting means (27) for moving the plurality of segments (12) radially inwardly to reduce and outwardly to enlarge the diameter of the contractible drum (25), said contracting means (27) including a cylinder actuator (52) slidably mounted on said tubular rotating shaft (34), said cylinder actuator (52) and rotating shaft (34) collectively forming an air chamber (54) therebetween, a piston (55) disposed on said rotating shaft (34) for dividing the air chamber (54) into a first chamber (54B) and a second chamber (54A), a plurality of linking pieces (53), each linking pieces (53) being connected to said cylinder actuator (52) and corresponding one of said segments (12), and means for pressurising said first chamber (54B) for causing said plurality of segments (12) to move radially outward to the outermost position in preparation for receiving the spirally wound reinforcing member and pressurising said second chamber (54A) for causing said plurality segments (12) to move radially inwardly thereby decreasing the diameter of the contractible drum (25).

2. An apparatus according to claim 1, characterised in that each of said plurality of segments (12) further comprises a protrusion (14) provided in each edge of the convex the shaping face (15) for preventing axial movement of the wound reinforcing member beyond the shaping face (15).

3. An apparatus according to claim 1 or 2, characterised in that each of said plurality of segments (12) has a generally trapezoidal-shaped cross section.

4. An apparatus according to claim 3, characterised in that said plurality of linking pieces (53) include first linking pieces connected to the first segments (12A) and second linking pieces connected to the second segments (12B), the second linking pieces having a shorter length than the first linking pieces for causing different lengths of radial movement between the first and second segments.

5. An apparatus according to any of claims 1 to 4, characterised in that said rotating shaft (34) has a first hole for communicating high pressure to said first changer (54B) and a second hole for communicating high pressure to said second chamber (54A).

## Patentansprüche

1. Eine Vorrichtung (A) zum Herstellen eines Radialreifengürtels aus einem spiralartig gewickelten Band (10) aus einer Gummiverbindung (21) mit einem oder einer Vielzahl von parallelen verstärkenden Gürtelkorden (9), die längs der Länge davon eingebettet sind, mit einem Hauptrahmen (30) mit einer Trägerwelle (32), einer kontrahierbaren Trommel (25) mit einer Formgebungsfläche zum Empfangen des spiralartig gewickelten Bandes (10), einem Drehmittel (29) zum Drehen der kontrahierbaren Trommel (25), wenn das spiralartig gewickelte Band (10) empfangen wird, wobei die kontrahierbare Trommel (25) eine Vielzahl von in Umfangsrichtung beabstandeten Segmenten (12) für die Einwärts- und Auswärtsradialbewegung aufweist, wobei jedes der Segmente (12) eine konvex geformte Oberfläche (15) zum kollektiven Formen der Formgebungsfläche (13) der kontrahierbaren Trommel (25) in einer äußersten Position aufweist, die kontrahierbare Trommel (25) ein Mittel zum Halten des spiralartig gewickelten Gliedes an der Stelle mit Bezug auf die Formgebungsfläche aufweist, wenn das Band (10) auf die Trommel gewickelt wird, wobei das Drehmittel (29) eine röhrenförmige Drehwelle (34) umfaßt, die drehbar auf der Trägerwelle (32) zum Tragen der kontrahierbaren Trommel (25) befestigt ist, wobei die Vielzahl von Segmenten (12) in alternierend angeordnete erste Segmente (12A) und zweite Segmente (12B) geteilt sind, wovon jedes der ersten Segmente (12A) entgegengesetzte Seiten (46) aufweist, die radial in Richtung auf die Mitte der kontrahierbaren Trommel (25) zum Anstoßen der zweiten Segmente (12B) geneigt sind, und jedes der zweiten Segmente (12B) entgegengesetzte Seiten (47) aufweist, die radial auswärts von der Mitte der kontrahierbaren Trommel (25) zum Anstoßen der ersten Segmente (12A) geneigt sind, derart, daß die Vielzahl von Segmenten (12) in der äußersten Position zusammenpassen, um eine im wesentlichen kontinuierliche Formgebungsfläche (13) zu bilden, einer Vielzahl von Führungswellen (45), die je einem der Segmente (12) entsprechen und sich radial auswärts von der Drehwelle (34) erstrecken, zum Führen der Radialbewegung und Verhindern axialer Bewegung von jedem der Vielzahl von Segmenten (12), Kontrahiermitteln (27) zum Bewegen der Vielzahl von Segmenten (12) radial einwärts, um den Durchmesser der kontrahierbaren Trommel (25) zu verringern, und auswärts, um diesen zu vergrößern, wobei das Kontrahiermittel (27) einen Zylinderbetätiger (52) umfaßt, der gleitfähig auf der röhrenförmigen Drehwelle (34) angebracht ist, wobei die Zylinderbetätiger (52) und Drehwelle (34) kollektiv eine Luftkammer (54) dazwischen bilden, ein Kolben (55), der auf der Drehwelle (34) zum Teilen der Luftkammer (54) in eine erste Kammer (54B) und eine zweite Kammer (54A) angeordnet ist, einer Vielzahl von Verbindungsstücken (53), wobei jede Verbindungsstücke (53) mit dem Zylinderbetätiger (52) und einem entsprechenden der Segmente (12) verbunden sind, und einem Mittel zum Unter-Druck-Setzen der ersten Kammer (54B), um zu veranlassen, daß die Vielzahl von Segmenten (12) sich radial auswärts zu der äußersten Position in Vorbereitung auf das Empfangen des spiralartig gewickelten Verstärkungsgliedes bewegt, und Unter-Druck-Setzen der zweiten Kammer (54A), um zu veranlassen, daß die Vielzahl Segmente (12) sich radial einwärts bewegt, wodurch der Durchmesser der kontrahierbaren Trommel (25) verringert wird.

2. Eine Vorrichtung nach Anspruch 1, dadurch gekennzeichnet, daß jedes der Vielzahl von Segmenten (12) weiter einen Vorsprung (14) umfaßt, der in jedem Rand der Konvexen der Formgebungsfläche (15) zum Verhindern einer Axialbewegung des gewickelten Verstärkungsgliedes über die Formgebungsfläche (15) vorgesehen ist.

3. Eine Vorrichtung nach einem der Ansprüche 1 oder 2, dadurch gekennzeichnet, daß jedes der Vielzahl von Segmenten (12) einen allgemein trapezförmigen Querschnitt aufweist.

4. Eine Vorrichtung nach Anspruch 3, dadurch gekennzeichnet, daß die Vielzahl von Verbindungsstücken (53) erste Verbindungsstücke umfasst, die mit den ersten Segmenten (12A) verbunden sind, und zweite Verbindungsstücke, die mit den zweiten Segmenten (12B) verbunden sind, wobei die zweiten Verbindungsstücke eine kürzere Länge als die ersten Verbindungsstücke aufweisen, um unterschiedliche Längen der Radialbewegung zwischen den ersten und zweiten Segmenten zu verursachen.

5. Eine Vorrichtung nach einem der Ansprüche 1 bis 4, dadurch gekennzeichnet, daß die Drehwelle (34) ein erstes Loch zum Kommunizieren von Hochdruck zu dem ersten Wechsler (54B) und ein zweites Loch zum Kommunizieren von Hochdruck zu der zweiten Kammer (54A) aufweist.

## Revendications

1. Appareil (A) de réalisation d'une ceinture pour pneumatique à carcasse radiale à partir d'un ruban (10) enroulé en spirale et formé d'une composition de caoutchouc (21) ayant un ou plusieurs câblés parallèles (9) de ceinture de renforcement enrobés sur sa longueur, comprenant un châssis principal (30) ayant un arbre (32) de support, un tambour rétractable (25) ayant une face de mise en forme destinée à recevoir le ruban (10) qui est enroulé en spirale, un dispositif (29) d'entraînement en rotation du tambour rétractable (25) lors de la réception du ruban (10) enroulé en spirale, le tambour rétractable (25) ayant plusieurs segments (12) disposés circonférentiellement et destinés à présenter un mouvement radial vers l'intérieur et vers l'extérieur, chacun des segments (12) ayant une surface (15) de forme convexe destinée à la réalisation collective de la face (13) de mise en forme du tambour rétractable (15) dans une position la plus externe, le tambour rétractable (25) possédant un dispositif de maintien de l'organe enroulé en spirale en position par rapport à la face de mise en forme lorsque le ruban (10) est enroulé sur le tambour, le dispositif (29) d'entraînement en rotation comportant un arbre tubulaire rotatif (34) monté afin qu'il puisse tourner sur l'arbre (32) de support et qu'il supporte le tambour rétractable (25), les segments (12) étant divisés en premiers segments (12A) et en seconds segments (12B) qui sont disposés en alternance, chacun des premiers segments (12A) ayant des côtés opposés (46) inclinés radialement vers le centre du tambour rétractable (25) afin qu'il soit en butée contre des seconds segments (12B), chacun des seconds segments (12B) ayant des côtés opposés (47) qui sont radialement inclinés vers l'extérieur depuis le centre du tambour rétractable (25) afin qu'il soit en butée contre des premiers segments (12A), si bien que les segments (12) qui sont à la position la plus externe s'ajustent en formant une face pratiquement continue de mise en forme (13), plusieurs arbres (45) de guidage correspondant chacun à l'un des segments (12) et disposés radialement vers l'extérieur depuis l'arbre rotatif (34) et destinés à guider le mouvement radial et à empêcher un mouvement axial de chacun des segments (12), un dispositif (27) de contraction destiné à déplacer les segments (12) radialement vers l'intérieur afin qu'ils réduisent et vers l'extérieur afin qu'ils augmentent le diamètre du tambour rétractable (25), le dispositif (27) de contraction comportant un organe à vérin de manoeuvre (52) monté afin qu'il coulisse sur l'arbre tubulaire rotatif (34), l'organe de manoeuvre à vérin (52) et l'arbre rotatif (34) formant collectivement une chambre pneumatique (54) entre eux, un piston (55) placé sur l'arbre rotatif (34) et destiné à séparer la chambre pneumatique (54) en une première chambre (54B) et une seconde chambre (54A), plusieurs pièces de liaison (53), chaque pièce de liaison (53) étant raccordée à l'organe de manoeuvre à vérin (52), et à un segment correspondant (12), et un dispositif destiné à mettre sous pression la première chambre (54B) de manière que les segments (12) se déplacent radialement vers l'extérieur vers la position la plus externe avant la réception de l'organe de renforcement enroulé en spirale et la mise sous pression de la seconde chambre (54A) afin que les segments (12) se déplacent radialement vers l'extérieur et réduisent ainsi le diamètre du tambour rétractable (25).

2. Appareil selon la revendication 1, caractérisé en ce que chacun des segments (12) comporte en outre une saillie (14) placée à chaque bord de la partie convexe de la face de mise en forme (15) afin qu'elle empêche un déplacement axial de l'organe enroulé de renforcement au-delà de la face de mise en forme (15).

3. Appareil selon la revendication 1 ou 2, caractérisé en ce que chacun des segments (12) a une section de forme pratiquement trapézoïdale.

4. Appareil selon la revendication 3, caractérisé en ce que les pièces de liaison (53) comportent des premières pièces de liaison raccordées aux premiers segments (12A) et des secondes pièces de liaison raccordées aux seconds segments (12B), les secondes pièces de liaison ayant une longueur inférieure à celle des premières pièces de liaison afin qu'elles provoquent des déplacements radiaux de longueurs différentes entre les premiers et les seconds segments.

5. Appareil selon l'une quelconque des revendications 1 à 4, caractérisé en ce que l'arbre rotatif (34) possède un premier trou de communication d'une pression élevée à la première chambre (54B) et un second trou de communication de la pression élevée à la seconde chambre (54A).
